# EUROPEAN PATENT APPLICATION

(11) **EP 4 406 737 A1**
(43) Date of publication of application: **31.07.2024**
(21) Application number: 22872823.4
(22) Date of filing: 15.09.2022
(51) Int. Cl.: B32B 27/30, B32B 27/36, B65D 65/40, C09D 129/04, C09D 167/04, C09J 129/04, C09J 167/04, C09J 7/35

(54) **AQUEOUS DISPERSION**

(30) Priority: 22.09.2021 JP 2021154503
(71) Applicant: Chukyo Yushi Co., Ltd., Ama-shi, Aichi 490-1212 (JP)
(72) Inventor: HIRAMATSU Hiroshi, Ama-shi, Aichi 490-1212 (JP); KATOU Yuuki, Ama-shi, Aichi 490-1212 (JP); SATOU Seiji, Ama-shi, Aichi 490-1212 (JP); ABE Yoshiyuki, Ama-shi, Aichi 490-1212 (JP); KAWAMURA Shougo, Ama-shi, Aichi 490-1212 (JP); HAYASHI Wakana, Ama-shi, Aichi 490-1212 (JP)
(74) Representative: Winter, Brandl - Partnerschaft mbB
(86) International application number: PCT/JP2022/034645
(87) International publication number: WO 2023/048069

(57) **Abstract**

An aqueous dispersion containing polylactic acid as a dispersoid and polyvinyl alcohols as a dispersant is improved to impart more excellent heat-sealing properties and water-resisting properties to a resulting polylactic acid film. An aqueous dispersion for forming a film containing 3 g/m² (dry weight) or more of polylactic acid to a substrate, the aqueous dispersion including polylactic acid, polyvinyl alcohols, and water, in which the polyvinyl alcohols have an average saponification degree of 60.0 to 82.0 mol%, and a blending ratio (mass ratio) of the polylactic acid and the polyvinyl alcohols is 98/2 to 90/10.

## Description

### TECHNICAL FIELD

The present invention relates to improvement of an aqueous dispersion containing polylactic acid as a dispersoid.

### BACKGROUND ART

From demands of Plastic Free and environmental conservation, a laminate has been proposed that is obtained by laminating a biodegradable polylactic acid film on a sheet (a substrate) made of a cellulose material such as paper. By superposing and heat-sealing a pair of the laminates such that layers of polylactic acid are butted against each other, excellent heat-sealing properties can be provided between the two laminates.

In forming the polylactic acid film, a method has been proposed in which an aqueous dispersion of polylactic acid is prepared, applied to a surface of the sheet, and then dried.

An example of such an aqueous dispersion of polylactic acid is described in Patent document 1.

In this aqueous dispersion, a polyvinyl alcohol-based resin is used as a dispersant, and a blending ratio of the polyvinyl alcohol-based resin to the polylactic acid is set to a specific ratio (the blending ratio of the polyvinyl alcohol-based resin to the polylactic acid is 99/1 to 30/70 (mass ratio)), so that the obtained aqueous dispersion of polylactic acid has excellent storage stability, and a film obtained by applying and drying the aqueous dispersion imparts adhesion properties, coating film forming properties, and coating properties to a substrate.

### PRIOR ART DOCUMENTS

### PATENT DOCUMENT

Patent document 1: JP 2004-285144 A

### SUMMARY OF INVENTION

### TECHNICAL PROBLEMS

As a demand for forming a laminate with an aqueous dispersion of polylactic acid increases, the heat-sealing properties required for such a laminate has also become more excellent. According to a study of the present inventors, when thermal pressure bonding is performed at 100°C, heat-sealing properties of 5.0 (N/15 mm) or more is required.

Note that, the laminate is required to have water-resisting properties, and for example, a value of 10 g/m² or less in Cobb water absorptiveness is required.

### SOLUTIONS TO PROBLEMS

The present inventors have intensively studied to solve the above problems. As a result, the present inventors have found that the excellent heat-sealing properties can be obtained by adjusting a saponification degree of the polyvinyl alcohols and the blending ratio (mass ratio) of the polylactic acid and the polyvinyl alcohols.

An aqueous dispersion according to a first aspect of the present invention is defined as follows.

An aqueous dispersion for forming a film having heat-sealing properties of 5.0 (N/15 mm) or more (JIS Z 1707, peeling speed: 300 mm/min) when the film is subjected to thermal pressure bonding at 100°C, the film containing 3 g/m² (dry weight) or more of polylactic acid to a substrate, the aqueous dispersion comprising:
polylactic acid; polyvinyl alcohols; and water, wherein
the polyvinyl alcohols have an average saponification degree of 60.0 to 82.0 mol% and an average polymerization degree of 200 to 700, and
a blending ratio (mass ratio) of the polylactic acid and the polyvinyl alcohols is 98/2 to 90/10.

According to the aqueous dispersion defined as described above, excellent heat-sealing properties and water-resisting properties are obtained.

As the polyvinyl alcohols, polyvinyl alcohol is preferably used (a second aspect).

Here, the polyvinyl alcohol is a polymer having polyvinyl acetate obtained by polymerizing vinyl acetate as a basic skeleton, and in examples of the present invention, polyvinyl alcohol obtained by partially saponifying the polyvinyl acetate was used.

The polyvinyl alcohols include, in addition to the polyvinyl alcohol itself, a monomer containing a sulfonic acid group, a carboxyl group, an amino group, and the like that can be copolymerized with vinyl acetate, and a copolymer with a monomer such as ethylene or butanediol. In the present invention, a partially saponified copolymer is used. The polyvinyl alcohol partially saponified as described above and a modified product obtained by modifying a copolymer thereof are also included in the polyvinyl alcohols.

These polyvinyl alcohols function as a dispersant that disperses polylactic acid in water.

The average polymerization degree of the polyvinyl alcohols is set to 240 to 600 (a third aspect).

When polyvinyl alcohols having a saponification degree of 60.0 to 70.0 mol% are used, the average polymerization degree thereof is set to 230 to 300 (a fourth aspect). Preferably, the average polymerization degree is 240.

When polyvinyl alcohols having a saponification degree of 60.0 to 70.0 mol% are used, the average polymerization degree thereof is set to 500 to 700 (a fifth aspect). Preferably, the average polymerization degree is 600.

When polyvinyl alcohols having a saponification degree of 69.0 to 74.0 mol% are used, the average polymerization degree thereof is set to 400 to 600 (a sixth aspect). Preferably, the average polymerization degree is 500.

When polyvinyl alcohols having a saponification degree of 78.5 to 82.0 mol% are used, the average polymerization degree thereof is set to 200 to 400 (a seventh aspect). More preferably, the average polymerization degree is 300.

When polyvinyl alcohols having a saponification degree of 78.5 to 82.0 mol% are used, the average polymerization degree thereof is set to 400 to 600 (an eighth aspect). More preferably, the average polymerization degree is 500.

A ninth aspect of the present invention is a production method of a laminate using the aqueous dispersion defined in the first to eighth aspects, and is defined as follows. In other words, the production method of a laminate comprising:
a step of preparing the aqueous dispersion according to any one of the first to eight aspects;
a step of depositing the aqueous dispersion on a surface of a first substrate and a surface of a second substrate made of a cellulose material;
a step of removing the water from the aqueous dispersion to form a first sealing layer on the surface of the first substrate, and to form a second sealing layer on the surface of the second substrate; and
a step of adhering the first sealing layer and the second sealing layer to each other.

The first substrate constituting the surface of the first substrate is paper or a nonwoven fabric made of biodegradable cellulose fibers, and the second substrate constituting the surface of the second substrate is also paper or a nonwoven fabric made of cellulose. Here, the first substrate and the second substrate may be a continuous body or may be separate bodies. The first sealing layer and the second sealing layer may be formed of aqueous dispersions of different components.

In a production method according to a tenth aspect, in the step of adhering the first sealing layer and the second sealing layer to each other of the production method according to the ninth aspect, at least one of heat, pressure, and vibration such as ultrasonic wave is applied to the first sealing layer and the second sealing layer.

As a result, the step of adhering can be performed at a low cost.

In a production method according to an eleventh aspect, in the step of adhering the first sealing layer and the second sealing layer to each other in the production method according to the ninth aspect, a heating condition of 70 to 300°C and a pressurized condition of 0.1 to 1.0 MPa are applied to the first sealing layer and the second sealing layer for five seconds or shorter.

As a result, adhesion between the first sealing layer and the second sealing layer is stabilized.

A twelfth aspect defines a laminate obtained using the aqueous dispersion of the first to eighth aspects.

In other words, the twelfth aspect is defined as follows.

A laminate including:
a surface of the first substrate on which the first sealing layer formed of the aqueous dispersion according to any one of the first to eighth aspects is laminated, and
a surface of the second substrate on which the second sealing layer formed of the aqueous dispersion according to any one of the first to eighth aspects is laminated, wherein
a film thickness of the first sealing layer is 3 to 10 g/m², a film thickness of the second sealing layer is 3 to 10 g/m², and heat-sealing strength when the first sealing layer and the second sealing layer are heat-sealed at 100°C and 0.2 MPa for one second is 5 N/15 mm or more and less than 10 N/15 mm or less (JIS Z 1707, peeling speed: 300 mm/min, peeling condition: 180°).

In the laminate according to the twelfth aspect, the heat-sealing strength when the first sealing layer and the second sealing layer are heat-sealed at 120°C and 0.2 MPa for one second is 6 N/15 mm or more (JIS Z 1707, test speed: 300 mm/min, peeling condition: 180°) (a thirteenth aspect).

In the laminate according to the twelfth aspect or the thirteenth aspect, as the water-resisting properties, the Cobb water absorptiveness is 10.0 g/m² or less (a fourteenth aspect and a fifteenth aspect).

A sixteenth aspect of the present invention is defined as follows, that is, use of the aqueous dispersion according to any one of the first to eighth aspects for production of a coating agent or a binder.

### DESCRIPTION OF EMBODIMENTS

The reason why polylactic acid has been selected as a biodegradable resin is that it has been industrially put to practical use, and is inexpensive and preferable for food packaging as compared with other biodegradable resins. Note that, in a case where a polylactic acid film laminated on the substrate is applied as a heat seal layer, the blending ratio of L-type and D-type polylactic acid is preferably 6 : 94 to 94 : 6. In this range, excellent heat-sealing properties can be obtained. On the other hand, when the blending ratio deviates from this range, a degree of crystallinity and a melting point increase, so that it may be difficult to exhibit heat sealing properties at a low temperature.

As the polylactic acid, in addition to a homopolymer containing lactic acid as a monomer, a copolymer with another hydroxycarboxylic acid can also be used as long as biodegradability is not inhibited.

As an auxiliary agent added for modifying the polylactic acid, a biodegradable resin other than polylactic acid can be blended.

In the above, the biodegradable resin is a material that is completely consumed by microorganisms and produces only natural by-products.

Examples of such a biodegradable resin include the following.

Examples thereof include polylactic acids such as copolymers of lactic acid and other hydroxycarboxylic acids, polycaprolactones such as polycaprolactone (PCL) and copolymers of caprolactone and hydroxycarboxylic acids, polybutylene succinate (PBS), polybutylene succinate adipate (PBSA), thermoplastic starch (TPE), polymalate (PMA), polybutylene adipate terephthalate (PBAT), polyethylene terephthalate succinate (PETS), polybutylene terephthalate succinate (PBTS), polyhydroxy alkanoic acids (PHA, PHB, PHV, PHBH, etc.), polyethylene furanoate (PEF), and polyglycolic acid (PGA). These compounds can be used alone or in combination of two or more kinds.

A blending amount of the biodegradable resin is appropriately selected according to an application of the aqueous dispersion and the like, and can be, for example, 1.0 to 50.0% by mass to the polylactic acid.

Further, the polylactic acid film has excellent water-resisting properties and oil-resisting properties, and can be utilized as water-resistant paper and oil-resistant paper by being laminated on a paper substrate.

Note that, according to the study of the present inventors, a food packaging material is required to have excellent water-resisting properties, and for example, the Cobb water absorptiveness is preferably 10 g/m² or less.

Although the material constituting the substrate can be arbitrarily selected as long as the polylactic acid film is fused, since an object of selecting polylactic acid is biodegradable, it is preferable that this substrate is also made of a biodegradable material.

Examples of such a substrate include paper, nonwoven fabrics, and cloths made of biodegradable fibers such as cellulose, and biodegradable resin films.

Polyvinyl alcohols are used as a dispersant for dispersing polylactic acid in water as a dispersion medium.

In examples of the present invention, polyvinyl alcohol having a predetermined saponification degree is used as the polyvinyl alcohols.

In Patent document 1, polyvinyl alcohols having a saponification degree of 84 mol% or less and an average polymerization degree of 700 or less are proposed.

The present inventors have found that excellent heat-sealing properties and water-resisting properties can be secured by using polyvinyl alcohols having a saponification degree of 60 to 82 mol%.

As defined in the first aspect described above, the configuration is as follows.

An aqueous dispersion for forming a film containing 3 g/m² (dry weight) or more of polylactic acid to a substrate, the aqueous dispersion comprising:
polylactic acid; polyvinyl alcohols; and water, wherein
the polyvinyl alcohols have an average saponification degree of 60.0 to 82.0 mol%, and
a blending ratio (mass ratio) of the polylactic acid and the polyvinyl alcohols is 98/2 to 90/10.

### [Examples]

Hereinafter, the present invention will be specifically described with reference to examples, but the present invention is not limited thereto.

The aqueous dispersions of examples and comparative examples were coated on one side using a bar coater so that a desired film thickness (dry mass, g/m²) is formed on a paper substrate (manufactured by Nippon Paper Industries Co., Ltd.: NPI high quality paper), and dried at 130°C for 60 seconds to prepare a heat seal layer on a substrate sheet. Note that, the film thickness (g/m²) was calculated by weighing the paper substrate before and after coating.

Note that, various characteristics were measured or evaluated by the following methods.

### (1) Heat-sealing strength evaluation

Heat seal layers of the paper substrate were heat-sealed by changing a heat-sealing temperature to 80, 90, 100, 110, and 120°C with a heat sealer to prepare evaluation samples in which only the heat-sealing temperature was changed. Note that, a constant condition of press pressure of 0.2 MPa and press time of one second were used during heat sealing. The heat-sealing strength was measured with a tensile tester according to JIS Z 1707, and was determined from the heat-sealing strength (N/15 mm) when a tensile speed was 300 mm/min and a peeling condition was 180° peeling.

In the current market, heat-sealing strength of 5 N/15 mm or more is required. More preferably, heat-sealing strength of 6 N/15 mm or more is required.

In order to bond (seal) a pair of polylactic acid films in close contact with each other, it is preferable to maintain a heated state at 70 to 300°C for one to five seconds or shorter and a pressurized state at 0.1 to 1.0 MPa in a state where the two films are butted against each other. Note that, sealing at a lower temperature is more advantageous for industrial use, for example, because energy efficiency is high and a sealing speed can be increased. Therefore, the temperature during sealing is more preferably 70 to 300°C, still more preferably 90 to 200°C, and most preferably 100 to 150°C.

The method for sealing the pair of polylactic acid films is not limited to the pressurized heating (heat sealing) described above.

By increasing the heating condition, sealing can be performed without pressurization.

If the pressurization condition is increased, sealing can be performed without heating.

Furthermore, sealing can be performed by ultrasonic vibration without heating or pressurization.

Of course, sealing can be performed by any combination of heating, pressurization, and vibration.

### (2) Water-resisting properties evaluation

According to JIS-P8140 (1998), the Cobb water absorptiveness (g/m²) after 120 seconds of the heat seal layer of the paper substrate was measured using a Cobb water absorptiveness tester (trade name: GURLEY COBB SIZE TESTER, manufactured by KUMAGAI RIKI KOGYO Co., Ltd.). The smaller the value, the better the water-resisting properties.

In the current market, a Cobb water absorptiveness value of 10 g/m² or less is required.

### (3) Saponification degree and polymerization degree of polyvinyl alcohol

Values obtained according to JISK6726-1994 were shown.

### (3) Particle size

A value for 50% of a cumulative size distribution obtained by measurement with a light diffraction type particle size measuring device (Microtrac MT3300 II manufactured by MicrotracBEL Corp.) is shown as a particle size. Details are explained in "Color Material" 67[7], 463-473 (1994).

The dispersant in the aqueous dispersion of examples and comparative examples are shown in Table 1.

For water that is a dispersion medium for this dispersant, the blending ratio between the water and the dispersant is arbitrarily selected according to the required viscosity and the like. Further, the characteristics of the water itself (hardness, ion concentration, etc.) are also arbitrarily selected according to the application of the aqueous dispersion. Various auxiliary agents can be added to the water. The auxiliary agents will be described later.

Aqueous solutions in each of which specific amount of specific kind of polyvinyl alcohol was dissolved in 50 parts by mass of water were prepared, and polylactic acid (PLA LX930 D-type lactic acid : L-type lactic acid = 10 : 90 manufactured by Total Corbion PLA) was dispersed therein by a general phase inversion emulsification method to prepare aqueous dispersions of examples and comparative examples. The blending ratio (mass ratio) of the polylactic acid and the polyvinyl alcohol is set to 98/2 to 90/10. In this range, by using a polyvinyl alcohol with a saponification degree in a predetermined range, suitable heat-sealing properties and water-resisting properties can be secured.

When the blending ratio of the polyvinyl alcohol is less than 2% by mass, the polylactic acid may not be uniformly dispersed in water. When the blending ratio of the polyvinyl alcohol exceeds 10% by mass, the heat-sealing strength and Cobb water absorptiveness may be deteriorated.

In a combination of polylactic acid and a polyvinyl alcohol, since the polylactic acid is exclusively responsible for the heat-sealing properties and water-resisting properties, it is preferable to increase the ratio of the polylactic acid. According to the study of the present inventors, the blending ratio (mass ratio) of both is preferably 98/2 to 95/5.

Here, as the phase inversion emulsification method, a known mechanical emulsification method such as a colloid mill, a homomixer, a homogenizer, various extruders, a kneader ruder, or a triaxial planetary disperser can be used.

The particle size of the polylactic acid in the aqueous dispersion is prepared by controlling the conditions (time, temperature, rotation speed, etc.) of the phase inversion emulsification method.

Hereinafter, examples and comparative examples of the present invention will be described.

**[Table 1]**

| | Dispe rsant | Standard range | | Median value | | Blending ratio | | Parti cle size | Film thick ness | Heat-sealing strength (N/15 mm) | | | | | Cobb water absorpt iveness |
|---|---|---|---|---|---|---|---|---|---|---|---|---|---|---|---|
| | | Saponificati on degree (mol%) | Polymeriz ation degree | Average saponificat ion degree (mol%) | Average polymer ization degree | Polyl actic acid | Polyvin yl alcohol | (µm) | (g/m2) | 80°C | 90°C | 100°C | 110°C | 120°C | (g/m²) |
| Comparative Example 1 | PVA1 | 60.0-70.0 | 230-300 | 65 | 240 | 95 | 5 | 2.4 | 2 | 0.0 | 0.3 | 4.1 | 5.4 | 5.7 | 19.8 |
| Example 1 | PVA1 | 60.0-70.0 | 230-300 | 65 | 240 | 95 | 5 | 2.4 | 3 | 0.1 | 0.3 | 5.1 | 5.8 | 6.7 | 9.0 |
| Example 2 | PVA1 | 60.0-70.0 | 230-300 | 65 | 240 | 95 | 5 | 2.4 | 10 | 0.2 | 0.5 | 5.3 | 6.2 | 7.2 | 7.5 |
| Example 3 | PVA1 | 60.0-70.0 | 230-300 | 65 | 240 | 95 | 5 | 2.4 | 20 | 0.2 | 0.6 | 5.6 | 6.6 | 7.5 | 6.3 |
| Example 4 | PVA1 | 60.0-70.0 | 230-300 | 65 | 240 | 95 | 5 | 2.4 | 10 | 0.3 | 0.5 | 5.9 | 6.8 | 7.8 | 5.1 |
| Example 5 | PVA1 | 60.0-70.0 | 230-300 | 65 | 240 | 98 | 2 | 2.5 | 10 | 0.3 | 0.6 | 5.9 | 7.0 | 7.9 | 5.4 |
| Example 6 | PVA1 | 60.0-70.0 | 230-300 | 65 | 240 | 90 | 10 | 1.8 | 10 | 0.1 | 0.4 | 5.2 | 5.8 | 6.2 | 9.3 |
| Example 7 | PVA2 | 60.0-70.0 | 500-700 | 65 | 600 | 95 | 5 | 1.7 | 3 | 0.1 | 0.2 | 5.2 | 5.6 | 6.3 | 8.6 |
| Example 8 | PVA2 | 60.0-70.0 | 500-700 | 65 | 600 | 90 | 10 | 1.8 | 10 | 0.1 | 0.3 | 5.0 | 5.4 | 6.1 | 8.9 |
| Example 9 | PVA3 | 69.0-74.0 | 400-600 | 72 | 500 | 95 | 5 | 1.7 | 10 | 0.2 | 0.6 | 5.8 | 6.5 | 7.4 | 8.8 |
| Example 10 | PVA4 | 78.5-82.0 | 200-400 | 80 | 300 | 95 | 5 | 1.9 | 10 | 0.2 | 0.6 | 5.9 | 6.9 | 7.7 | 8.0 |
| Example 11 | PVA5 | 78.5-82.0 | 400-600 | 80 | 500 | 95 | 5 | 2.0 | 3 | 0.1 | 0.5 | 5.1 | 5.7 | 6.5 | 9.7 |
| Example 12 | PVA5 | 78.5-82.0 | 400-600 | 80 | 500 | 95 | 5 | 2.0 | 5 | 0.2 | 0.6 | 5.5 | 6.0 | 6.6 | 8.7 |
| Example 13 | PVA5 | 78.5-82.0 | 400-600 | 80 | 500 | 95 | 5 | 2.0 | 10 | 0.2 | 0.7 | 5.9 | 6.6 | 7.0 | 7.1 |
| Example 14 | PVA5 | 78.5-82.0 | 400-600 | 80 | 500 | 95 | 5 | 2.4 | 10 | 0.2 | 0.6 | 5.9 | 6.7 | 7.2 | 5.8 |
| Example 15 | PVA5 | 78.5-82.0 | 400-600 | 80 | 500 | 90 | 10 | 1.9 | 10 | 0.2 | 0.5 | 5.2 | 5.9 | 6.5 | 9.8 |
| Comparative Example 2 | PVA6 | 86.5-89.0 | 400-600 | 88 | 500 | 95 | 5 | 2.5 | 10 | 0.0 | 0.4 | 4.3 | 5.1 | 5.8 | 10.8 |
| Comparative Example 3 | PVA7 | 86.5-89.0 | 1500-2000 | 88 | 1700 | 95 | 5 | 2.5 | 10 | 0.0 | 0.3 | 3.5 | 4.5 | 5.2 | 13.0 |

In Table 1, each name indicates the following components. Polylactic acid: Luminy LX930 (registered trademark) manufactured by Total Corbion PLA.
PVA1: partially saponified polyvinyl alcohol having an average saponification degree of 65 mol% and an average polymerization degree of 240
PVA2: partially saponified polyvinyl alcohol having an average saponification degree of 65 mol% and an average polymerization degree of 600
PVA3: partially saponified polyvinyl alcohol having a saponification degree of 72 mol% and an average polymerization degree of 500
PVA4: partially saponified polyvinyl alcohol having a saponification degree of 80 mol% and an average polymerization degree of 300
PVA5: partially saponified polyvinyl alcohol having a saponification degree of 80 mol% and an average polymerization degree of 500
PVA6: partially saponified polyvinyl alcohol having a saponification degree of 88 mol% and an average polymerization degree of 500
PVA7: partially saponified polyvinyl alcohol having a saponification degree of 88 mol% and an average polymerization degree of 1700

From the results in Table 1, the following can be seen.
(1) Comparison of Examples 1 to 15 with Comparative Examples 1 to 3 shows that when a polyvinyl alcohol having an average saponification degree of 60.0 to 82.0 mol% is used at a blending ratio (mass ratio) of the polylactic acid and the polyvinyl alcohol of 98/2 to 90/10, the heat-sealing strength exceeds 5 N/15 mm under the heat-sealing conditions of 100°C, 0.2 MPa, and one second, the heat-sealing strength exceeds 6 N/15 mm under the heat-sealing conditions of 120°C, 0.2 MPa, and one second, and the Cobb water absorptiveness is 10.0 g/m² or less, showing excellent water-resisting properties. However, even under the same conditions, when the film thickness of the polylactic acid film is less than 3 g/m² (Comparative Example 1), the heat-sealing strength and water-resisting properties cannot be secured.

Here, in Table 1, an average saponification degree of the polyvinyl alcohol is defined with a lower limit (60.0 mol%) of the standard range of the saponification degree of the polyvinyl alcohol used in Example 1 and the like and an upper limit (82.0 mol%) of the standard range of the saponification degree of the polyvinyl alcohol used in Example 13 and the like. This is because it can be predicted that the same effects as those of each example in Table 1 can be obtained with a polyvinyl alcohol having a saponification degree in such a range.

(2) Similarly, comparison between Examples 1 to 15 and Comparative Examples 1 to 3 shows that the average polymerization degree of the polyvinyl alcohol is preferably 200 to 700.

Here, in Table 1, an average polymerization degree of the polyvinyl alcohol was defined with the lower limit (200) of the standard range of the polymerization degree of the polyvinyl alcohol used in Example 1 and the like and the upper limit (700) of the standard range of the polymerization degree of the polyvinyl alcohol used in Example 13 and the like. This is because it can be predicted that the same effects as those of each example in Table 1 can be obtained with a polyvinyl alcohol having a polymerization degree in such a range.

The polymerization degree of the polyvinyl alcohol can also be defined in the median value thereof. At this time, a lower limit value is 240 and an upper limit value is 600.

From the results of Examples 1 to 6 in Table 1, it is found that suitable heat-sealing strength and water-resisting properties can be obtained by using a polyvinyl alcohol having an average saponification degree of 60.0 to 70.0 mol% and an average polymerization degree of 230 to 300.

Here, an average saponification degree of the polyvinyl alcohol was defined with the lower limit (60.0) and the upper limit (70.0) of the standard range of the saponification degree of the polyvinyl alcohol used in Example 1 and the like, and an average polymerization degree of the polyvinyl alcohol was defined with the lower limit (230) and the upper limit (300) of the standard range of the polymerization degree. This is because it can be predicted that the same effects as those of Examples 1 to 6 can be obtained with a polyvinyl alcohol having a saponification degree and a polymerization degree in such ranges.

From the results of Examples 7 and 8 in Table 1, it is found that suitable heat-sealing strength and water-resisting properties can be obtained by using a polyvinyl alcohol having an average saponification degree of 60.0 to 70.0 mol% and an average polymerization degree of 500 to 700.

Here, an average saponification degree of the polyvinyl alcohol was defined with the lower limit (60.0) and the upper limit (70.0) of the standard range of the saponification degree of the polyvinyl alcohol used in Example 7 and the like, and an average polymerization degree of the polyvinyl alcohol was defined with the lower limit (500) and the upper limit (700) of the standard range of the polymerization degree. This is because it can be predicted that the same effects as those of Examples 7 and 8 can be obtained with a polyvinyl alcohol having a saponification degree and a polymerization degree in such ranges.

From the results of Example 9 in Table 1, it is found that suitable heat-sealing strength and water-resisting properties can be obtained by using a polyvinyl alcohol having an average saponification degree of 69.0 to 74.0 mol% and an average polymerization degree of 400 to 600.

Here, an average saponification degree of the polyvinyl alcohol was defined with the lower limit (69.0) and the upper limit (74.0) of the standard range of the saponification degree of the polyvinyl alcohol used in Example 9, and an average polymerization degree of the polyvinyl alcohol was defined with the lower limit (400) and the upper limit (600) of the standard range of the polymerization degree. This is because it can be predicted that the same effects as those in Example 9 can be obtained with a polyvinyl alcohol having a saponification degree and a polymerization degree in such ranges.

From the results of Example 10 in Table 1, it is found that suitable heat-sealing strength and water-resisting properties can be obtained by using a polyvinyl alcohol having an average saponification degree of 78.5 to 82.0 mol% and an average polymerization degree of 200 to 400.

Here, an average saponification degree of the polyvinyl alcohol was defined with the lower limit (78.5) and the upper limit (82.0) of the standard range of the saponification degree of the polyvinyl alcohol used in Example 10, and an average polymerization degree of the polyvinyl alcohol was defined with the lower limit (200) and the upper limit (400) of the standard range of the polymerization degree. This is because it can be predicted that the same effect as those of Example 10 can be obtained with a polyvinyl alcohol having a saponification degree and a polymerization degree in such ranges.

From the results of Examples 11 to 15 in Table 1, it is found that suitable heat-sealing strength and water-resisting properties can be obtained by using a polyvinyl alcohol having an average saponification degree of 78.5 to 82.0 mol% and an average polymerization degree of 400 to 600.

Here, an average saponification degree of the polyvinyl alcohol was defined with the lower limit (78.5) and the upper limit (82.0) of the standard range of the saponification degree of the polyvinyl alcohol used in Examples 11 to 15, and an average polymerization degree of the polyvinyl alcohol was defined with the lower limit (400) and the upper limit (600) of the standard range of the polymerization degree. This is because it can be predicted that the same effects as those of Examples 11 to 15 can be obtained with a polyvinyl alcohol having a saponification degree and a polymerization degree in such ranges.

The polyvinyl alcohols used in Examples were available as an industrial material, and were all partially saponified polyvinyl alcohols.

As long as it is applicable as a dispersant of polylactic acid and the average saponification degree and the average polymerization degree are defined as described above, the same effect can be obtained not only in polyvinyl alcohol itself but also in copolymers thereof and their modified products, that is, polyvinyl alcohol.

Hereinafter, auxiliary agents that can be used in the aqueous dispersion of the present invention will be described.

In other words, examples of the auxiliary agents include the following.

Examples of a pH adjusting agent include, but are not particularly limited, alkali metal hydroxides, alkaline earth metal hydroxides, other inorganic salts, and amines. Specific examples thereof include sodium hydroxide, potassium hydroxide, calcium hydroxide, calcium acetate, sodium lactate, calcium lactate, calcium oxalate, magnesium hydroxide, magnesium acetate, magnesium lactate, magnesium oxalate, basic aluminum lactate, basic aluminum chloride, ammonia, methylamine, dimethylamine, trimethylamine, triethylamine, monoethanolamine, diethanolamine, and triethanolamine. Note that, for neutralization, one kind of basic compound may be used alone, or two or more kinds of basic compounds may be used in combination.

By using the pH adjusting agent, a residual acid monomer in the polylactic acid and an acidic decomposition product generated when the polylactic acid is hydrolyzed can be neutralized. Since an acidic substance acts as a catalyst for hydrolysis, the pH adjusting agent is useful for suppressing the hydrolysis of polylactic acid.

The blending amount of the pH adjusting agent is appropriately selected according to the application of the aqueous dispersion and the like, and can be, for example, 0.05 to 2.0% by mass to the polylactic acid.

Examples of an auxiliary agent for increasing the water-resisting properties include a styrene-acrylic copolymer, starch, and wax.

Examples of a styrene-based monomer of the styrene-acrylic copolymer include, but are not particularly limited, styrene, α-methylstyrene, β-methylstyrene, 2,4-dimethylstyrene, α-ethylstyrene, α-butylstyrene, 4-methoxystyrene, and vinyltoluene. Examples of an acrylic monomer include, but are not particularly limited, (meth)acrylic acid esters such as methyl (meth)acrylate, ethyl (meth)acrylate, isopropyl (meth)acrylate, and n-butyl (meth)acrylate; (meth)acrylic acid ester derivatives such as 3-ethoxypropyl acrylate, 3-ethoxybutyl acrylate, and hydroxyethyl methacrylate; acrylic acid aryl esters and acrylic acid aralkyl esters such as phenyl acrylate and benzyl acrylate; and mono acrylic acid esters of polyhydric alcohols such as diethylene glycol, triethylene glycol, and glycerin.

Examples of the starch include corn starch, potato starch, tapioca starch, modified starches such as oxidized starch, phosphoric acid starch, etherified starch, dialdehyded starch, and esterified starch.

As the wax, waxes such as natural wax and synthetic wax can be used. Examples of the natural wax include plant-based natural waxes such as candelilla wax, rice wax, wood wax, and jojoba solid wax; animal-based natural waxes such as beeswax, lanolin, and spermaceti wax; mineral-based natural waxes such as montan wax, ozokerite, and ceresin; and petroleum-based natural waxes such as paraffin wax, microcrystalline wax, and petrolatum wax. Further, examples of the synthetic wax include synthetic hydrocarbons such as Fischer-Tropsch wax and polyethylene wax; modified waxes such as montan wax derivatives, paraffin wax derivatives, and microcrystalline wax derivatives; hydrogenated waxes such as hydrogenated castor oil and hydrogenated castor oil derivatives; ester waxes synthesized from higher fatty acids and higher alcohols obtained from 12-hydroxystearic acid, vegetable fats and oils and animal fats; stearic acid amide; and phthalic anhydride imide.

These waxes can be used alone or in combination of two or more kinds within a range in which the heat-sealing properties are not impaired.

As a dispersion auxiliary agent, one or a mixture of two or more selected from an anionic surfactant, a cationic surfactant, an amphoteric surfactant, a nonionic surfactant, a polymer surfactant, a cationic polymer compound, and an anionic polymer compound can be used.

As an auxiliary agent, the following thickening agent can be blended. By adjusting a viscosity, it is possible to improve the storage stability of the aqueous dispersion and improve coating suitability during application.

Examples of the thickening agent include cellulose derivatives such as methyl cellulose, carboxymethyl cellulose, hydroxyethyl cellulose, hydroxyethyl methyl cellulose, hydroxypropyl methyl cellulose, and hydroxypropyl cellulose; starch derivatives such as cationized starch and etherified starch; plant gums such as gum arabic, guar gum, and xanthan gum; animal polymers such as casein, chitosan, and chitin; and poly alkoxide-based polymers such as polyethylene glycol.

The blending amount of the thickening agent is appropriately selected according to the application of the aqueous dispersion and the like, and can be, for example, 0.01 to 2.0% by mass to a biodegradable resin aqueous dispersion.

As an auxiliary agent, a plasticizing agent can also be blended. The plasticizing agent is an auxiliary agent that softens the polylactic acid and the biodegradable resin, and can impart flexibility to the heat seal layer obtained from the polylactic acid.

Examples of the plasticizing agent include the following.

Examples thereof include citric acid derivatives such as triethyl citrate, tributyl citrate, triethyl acetyl citrate, and tributyl acetyl citrate, ether ester derivatives such as diethylene glycol diacetate, triethylene glycol diacetate, and triethylene glycol dipropionate, glycerin derivatives such as glycerin triacetate, glycerin tripropionate, and glycerin tributyrate, phthalic acid derivatives such as ethyl phthalyl ethyl glycolate, ethyl phthalyl butyl glycolate, and butyl phthalyl butyl glycolate, reaction products of adipic acid 2-(2-methoxyethoxy) ethanol and benzyl alcohol, adipic acid derivatives such as a condensate of adipic acid and 1,4-butanediol, and polyhydroxy carboxylic acids such as alkyl sulfonic acid phenyl ester, polycaprolactone, and polypropiolactone, and these plasticizing agents can be used alone or in combination of two or more kinds.

The blending amount of the plasticizing agent is appropriately selected according to the application of the aqueous dispersion and the like, and is, for example, preferably 1 to 15% by mass, more preferably 1 to 10% by mass, and most preferably 1 to 5% by mass to the polylactic acid. When the blending amount is less than 1% by mass, improvement in heat sealing performance becomes poor, and meaning of addition becomes poor, and when the blending amount is more than 15% by mass, the heat-sealing strength becomes weak, so that it is not practical.

In the dispersoid, in addition to the polylactic acid and the plasticizing agent described above, a carbodiimide compound can be blended as an auxiliary agent for improving temporal stability of the aqueous dispersion.

As the carbodiimide compound, it is desirable to use a polyvalent carbodiimide compound (a compound containing a plurality of carbodiimide groups in one molecule). More preferable examples thereof include derivatives obtained by reacting an isocyanate group of a carbodiimide-modified isocyanate compound or a carbodiimide-modified isocyanate compound with an amino group of cyclohexylamine or the like, a hydroxyl group of polyethylene glycol monomethyl ether or the like, a carboxylic acid group of cyclohexane carboxylic acid or the like, or the like.

The carbodiimide-modified isocyanate is obtained by carbodiimidizing a part of an isocyanate compound, and as the carbodiimide-modified isocyanate compound, a polymer of the following carbodiimide-modified isocyanate obtained by carbodiimidizing isocyanate can be used.

Examples of the carbodiimide-modified isocyanate include the following.

Examples thereof include phenylene diisocyanate, 4,4'-diphenylmethane diisocyanate, dimethyl biphenylene diisocyanate, dimethoxy biphenylene diisocyanate, tetrahydronaphthalene diisocyanate, tolylene diisocyanate, tetramethylene diisocyanate, hexamethylene diisocyanate, dodecamethylene diisocyanate, trimethylhexamethylene diisocyanate, cyclohexylene diisocyanate, polymethylene polyphenyl polyisocyanate, xylylene diisocyanate, hydrogenated xylylene diisocyanate, lysine diisocyanate, isophorone diisocyanate, dicyclohexylmethane diisocyanate, and 4,4'-dimethyl dicyclohexyl methane diisocyanate.

The polyvalent carbodiimide compound can be used alone or in combination of two or more kinds. The blending amount of the polyvalent carbodiimide compound is appropriately selected according to the application of the aqueous dispersion and the like, and is, for example, preferably 0.6 to 5.5% by mass and most preferably 0.6 to 2.6% by mass to the polylactic acid. Note that, when the blending ratio of the carbodiimide compound is less than 0.6% by mass to the polylactic acid, temporal stability for polylactic acid may not be sufficiently exhibited. On the other hand, even when the blending ratio exceeds 5.5% by mass, an effect commensurate with an amount of use cannot be obtained, which is not economical and not preferable, respectively.

The present invention is not limited to the description of embodiments of the invention. Various modifications that can be easily devised by those skilled in the art without departing from the scope of the claims are also included in the present invention.

## Claims

1. An aqueous dispersion for forming a film having heat-sealing properties of 5.0 (N/15 mm) or more (JIS Z 1707, peeling speed: 300 mm/min) when the film is subjected to thermal pressure bonding at 100°C, the film containing 3 g/m² (dry weight) or more of polylactic acid to a substrate, the aqueous dispersion comprising:
polylactic acid; polyvinyl alcohols; and water, wherein
the polyvinyl alcohols have an average saponification degree of 60.0 to 82.0 mol% and an average polymerization degree of 200 to 700, and
a blending ratio (mass ratio) of the polylactic acid and the polyvinyl alcohols is 98/2 to 90/10.

2. The aqueous dispersion according to claim 1, wherein the polyvinyl alcohols are polyvinyl alcohol.

3. The aqueous dispersion according to claim 1, wherein the polyvinyl alcohols have an average polymerization degree of 240 to 600.

4. The aqueous dispersion according to claim 1, wherein the polyvinyl alcohols have an average saponification degree of 60.0 to 70.0 mol% and an average polymerization degree of 230 to 300.

5. The aqueous dispersion according to claim 1, wherein the polyvinyl alcohols have an average saponification degree of 60.0 to 70.0 mol% and an average polymerization degree of 500 to 700.

6. The aqueous dispersion according to claim 1, wherein the polyvinyl alcohols have an average saponification degree of 69.0 to 74.0 mol% and an average polymerization degree of 400 to 600.

7. The aqueous dispersion according to claim 1, wherein the polyvinyl alcohols have an average saponification degree of 78.5 to 82.0 mol% and an average polymerization degree of 200 to 400.

8. The aqueous dispersion according to claim 1, wherein the polyvinyl alcohols have an average saponification degree of 78.5 to 82.0 mol% and an average polymerization degree of 400 to 600.

9. A production method of a laminate comprising:
a step of preparing the aqueous dispersion according to any one of claims 1 to 8;
a step of depositing the aqueous dispersion on a surface of a first substrate and a surface of a second substrate made of a cellulose material;
a step of removing the water from the aqueous dispersion to form a first sealing layer on the surface of the first substrate, and to form a second sealing layer on the surface of the second substrate; and
a step of adhering the first sealing layer and the second sealing layer to each other.

10. The production method according to claim 9, wherein in the step of adhering the first sealing layer and the second sealing layer to each other, at least one of heat, pressure, or vibration is applied to the first sealing layer and the second sealing layer.

11. The production method according to claim 9, wherein in the step of adhering the first sealing layer and the second sealing layer to each other, a heating condition of 70 to 300°C and a pressurized condition of 0.1 to 1.0 MPa are applied to the first sealing layer and the second sealing layer for five seconds or shorter.

12. A laminate comprising:
a surface of a first substrate on which a first sealing layer formed of the aqueous dispersion according to any one of claims 1 to 8 is laminated, and
a surface of a second substrate on which a second sealing layer formed of the aqueous dispersion according to any one of claims 1 to 8 is laminated, wherein
a film thickness of the first sealing layer is 3 to 10 g/m², a film thickness of the second sealing layer is 3 to 10 g/m², and heat-sealing strength when the first sealing layer and the second sealing layer are heat-sealed at 100°C and 0.2 MPa for one second is 5 N/150 mm or more and less than 10 N/150 mm or less (JIS Z 1707, peeling speed: 300 mm/min).

13. The laminate according to claim 12, wherein the heat-sealing strength when the first sealing layer and the second sealing layer are heat-sealed at 120°C and 0.2 MPa for one second is 6 N/15 mm or more (JIS Z 1707, test speed: 300 mm/min).

14. The laminate according to claim 12, having Cobb water absorptiveness of 10.0 g/m² or less.

15. The laminate according to claim 13, having Cobb water absorptiveness of 10.0 g/m² or less.

16. Use of the aqueous dispersion according to any one of claims 1 to 9 for production of a coating agent, an adhesive, or a binder.
